# EUROPÄISCHE PATENTSCHRIFT

(11) **EP 1 699 586 B1**
(45) Veröffentlichungstag und Bekanntmachung des Hinweises auf die Patenterteilung: **19.12.2007**
(21) Anmeldenummer: 04790692.0
(22) Anmeldetag: 21.10.2004
(51) Int. Cl.: B23D 35/00, B23D 15/06, B23K 26/42

(54) **DOPPELSCHNITTWERKZEUG UND VERFAHREN ZUR ANWENDUNG EINES DERARTIGEN DOPPELSCHNITTWERKZEUGES**
DOUBLE CUTTING TOOL AND METHOD FOR USING A TOOL OF THIS TYPE
OUTIL A DOUBLE TRANCHANT ET PROCEDE POUR UTILISER UN OUTIL A DOUBLE TRANCHANT DE CE TYPE

(30) Priorität: 09.12.2003 DE 10357944
(43) Veröffentlichungstag der Anmeldung: 13.09.2006
(73) Patentinhaber: ThyssenKrupp Drauz Nothelfer GmbH, 74076 Heilbronn (DE)
(72) Erfinder: ALBER, Gerhard, 88275 Berg (DE); WEBER, Edmund, 88353 Kisslegg (DE)
(74) Vertreter: Dahlkamp, Heinrich-Leo
(86) Internationale Anmeldenummer: PCT/EP2004/011885
(87) Internationale Veröffentlichungsnummer: WO 2005/061162

(56) Entgegenhaltungen:
- DE-C1- 19 819 148
- US-A- 5 113 733

## Beschreibung

Die Erfindung bezieht sich auf ein Doppelschnittwerkzeug zur gleichzeitigen Kantenvorbereitung von vorzugsweise mittels Laserstrahl zu verschweißenden Blechplatinen, vorzugsweise unterschiedlicher Dicke mit mindestens zwei parallel zueinander angeordneten Schnittmessern, die an einem gemeinsamen Messerhalter befestigt sind und mit diesem zum Schneiden senkrecht zur Ebene der Blechplatinen bewegbar sind und ein Verfahren zur gleichzeitigen Kantenvorbereitung von vorzugsweise mittels Laserstrahl zu verschweißenden Blechplatinen unter Verwendung eines Doppelschnittwerkzeuges nach den vorhergehenden Ansprüchen, wobei jeweils die beiden zu verschweißenden Blechplatinen gleichzeitig mit ein und demselben Doppelschnittwerkzeug beschnitten werden und vorzugsweise mit einer Handhabungsvorrichtung direkt in die Schweißstation eingelegt werden.

Beim Laserschweißen von Blechplatinen, insbesondere von sogenannten Tailored Blanks kommt es auf eine gute Kantenvorbereitung der zu verschweißenden Bleche an. Hierbei kann schon eine Zwischenlagerung und ein Transport der geschnittenen Bleche zu Beschädigungen an den Kanten führen, sodass es Probleme beim Herstellen einer gleichmäßigen Laserschweißnaht geben kann. Es hat sich daher die Verwendung eines sogenannten Doppelschnittwerkzeuges bewährt, bei dem an den beiden bereits grob vorgeschnittenen Blechplatinen unmittelbar vor dem Schweißvorgang mit zwei parallel zueinander in einer Vorrichtung angeordneten Schnittmessern in einem Schnittvorgang gleichzeitig die Kanten der beiden zugeordneten Blechplatinen beschnitten werden. Bei diesem Doppelschnittwerkzeug werden oder können bisher lediglich lineare Schnittlinien hergestellt werden.

Aus der DE 198 19 148 C1 ist eine Vorrichtung zur Herstellung von Stahlfasern zur Verstärkung gießbarer aushärtender Werkstoffe bekannt, wobei mittels einer stationären Schneide und mindestens einer damit korrespondierenden motorisch angetriebenen bewegten Schneide sowie einer schrittweise arbeitenden Vorschubeinrichtung für die Zuführung eines blechförmigen Vormateriales jeweils eine langgestreckte Faser unterschiedlicher Breite abgeschnitten wird. Über der Länge dieser Faser können dabei in Schnittrichtung auch eine Vielzahl von Schneiden nebeneinander angeordnet sein.

Der Erfindung liegt daher die Aufgabe zugrunde, das Anwendungsgebiet der Doppelschnittwerkzeuge zu erweitern.

Zur Lösung dieser Aufgabe ist ein Doppelschnittwerkzeug gemäß Anspruch 1 und ein Verfahren gemäß Anspruch 3 vorgesehen. Die Unteransprüche 2 und 4 enthalten sinnvolle Ausführungsformen des erfindungsgemäßen Doppelschnittwerkzeuges.

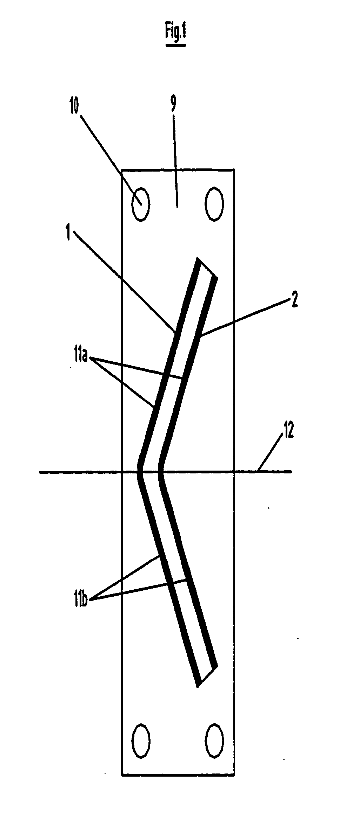

Das erfindungsgemäße Doppelschnittwerkzeug besitzt parall zueinander angeordnete Schnittmesser mit zweidimensionalen Schnittlinien, wobei die Schnittlinien vorzugsweise spiegelsymmetrisch zu einer Symmetrielinie angeordnet sein können. In einer bevorzugten Ausführungsform bestehen die Schnittlinien jeweils aus zwei geraden gleichlangen Schenkeln, die winklig zueinander angeordnet sind, wobei bevorzugt der Schnittpunkt dieser beiden Schenkel sich auf der Symmetrielinie befindet (vgl. beigefügte Fig. 1). Der Winkel der beiden Schenkel zueinander ist bei beiden Schnittmessern identisch und kann zwischen 0° und 180°, bevorzugt zwischen und 30° und 60° liegen.

Die beiden Schnittmesser können insbesondere an einem als ebene Platte ausgebildeten gemeinsamen Messerhalter befestigt sein und durch eine Hub- oder Stanzbewegung senkrecht zu den Blechplatinen den Schnittvorgang ausführen.

Durch die spiegelsymmetrische Ausbildung der Schnittlinien können auch verschiedene Bauteile bzw. Blechplatinen mit ein und demselben Doppelschnittwerkzeug beschnitten werden, wenn die jeweiligen Schnittlinien spiegelsymmetrisch zu einer Symmetrielinie verlaufen. Diese an den Blechplatinen auszuführenden Schnittlinien können dabei auch ausgehend von der Symmetrielinie nach außen unterschiedlich lang sein. Wichtig ist dabei nur, dass sie nicht länger sind als die Schenkel der beiden Schnittmesser. Die Länge der Schenkel wird also erfindungsgemäß so gewählt, dass auch die größte an den Blechplatinen auftretende Schnittlinie (von der Symmetrielinie aus nach außen) einwandfrei hergestellt werden kann. Diese Ausführung des Doppelschnittwerkzeuges hat den Vorteil, dass man nicht für jedes herzustellende Bauteil jeweils ein Doppelschnittwerkzeug benötigt, sondern auch die Blechplatinen für verschieden ausgebildete Bauteile beschneiden kann. Voraussetzung ist lediglich, dass sie zu einer Symmetrielinie spiegelsymmetrische Schnittlinien besitzen. Diese Schnittlinien können dabei insbesondere unterschiedlich lang sein.

Das erfindungsgemäße Verfahren unter Verwendung des beschriebenen Doppelschnittwerkzeuges sieht also vor, dass mit ein und demselben Doppelschnittwerkzeug nacheinander die Blechplatinen für spiegelbildliche Bauteile oder zumindest für Bauteile mit spiegelbildlichen Schnittlinien beschnitten werden, wobei die Blechplatinen jeweils spiegelbildlich zu der Symmetrielinie der Schnittlinie der Schnittmesser eingelegt werden.

Die Bewegung des Doppelschnittwerkzeuges bzw. des Messerhalters mit den beiden parallel zueinander angeordneten Schnittmessern kann mit Hilfe einer Presse und/oder von Druckzylindern oder sonstigen Betätigungseinrichtungen durchgeführt werden.

Die Erfindung wird anhand der beigefügten Figuren 1 bis 5 beispielsweise näher erläutert. Es zeigen
- Fig. 1: eine Draufsicht auf das erfindungsgemäße Doppelschnittwerlkzeug mit zwei parallel zueinander angeordneten Schnittmessern 1, 2, die eine zweidimensionale Schnittlinie 11 besitzen
- Fig. 2a: ein aus zwei Blechplatinen 5 und 6 zusammengefügtes Bauteil 3
- Fig. 2b: ein aus den Blechplatinen 5' und 6' zusammengefügtes Bauteil 3', wobei das Bauteil 3' spiegelbildlich zum Bauteil 3 angeordnet ist
- Fig. 3a: ein weiteres aus den Blechplatinen 7 und 8 zusammengefügtes Bauteil 4
- Fig. 3b: ein aus den Blechplatinen 7' und 8' zusammengefügtes Bauteil 4', das spiegelbildlich zum Bauteil 4 angeordnet ist
- Fig. 4a: die Anordnung von zwei Blechplatinen 5 und 6 im erfindungsgemäßen Doppelschnittwerkeug
- Fig. 4b: die Anordnung der Blechplatinen 5' und 6' in dem Doppelschnittwerkzeug
- Fig. 4c: die gleichzeitige Anordnung der Blechplatinen 5, 6 und 5', 6' in dem Doppelschnittwerkzeug
- Fig. 5a, Fig. 5b Fig. 5c: die Anordnung der Blechplatinen 7, 8, 7', 8' in dem Doppelschnittwerkzeug entsprechend der Darstellung nach Figuren 4a, 4b und 4c.

In den Figuren 1, 4a, 4b, 4c, 5a, 5b und 5c ist in der Draufsicht jeweils schematisch die Anordnung der beiden Schnittmesser 1 und 2 an einem Messerhalter 9 dargestellt, der Führungen 10 für nicht näher gezeichnete Stangen besitzt. An diesen Stangen wird dann während des Schnittvorganges der Messerhalter 9 mit den daran befestigten Schnittmessern 1 und 2 senkrecht zur Ebene der Blechplatinen bewegt. Die Schnittmesser 1 und 2 besitzen jeweils gleichlange Schenkel 11a, 11b, die genau auf der Symmetrielinie 12 verbunden sind.

Bei den in den weiteren Figuren dargestellten Bauteilen 3, 3', 4, 4' besitzen die jeweiligen Schnittlinien 11 unterschiedlich lange, gerade Schenkel. Die beiden Schenkel der Schnittmesser 1 und 2 sind erfindungsgemäß so dimensioniert, dass sie zumindest der Länge des längeren Schenkels der Schnittlinie der jeweiligen Bauteile entsprechen.

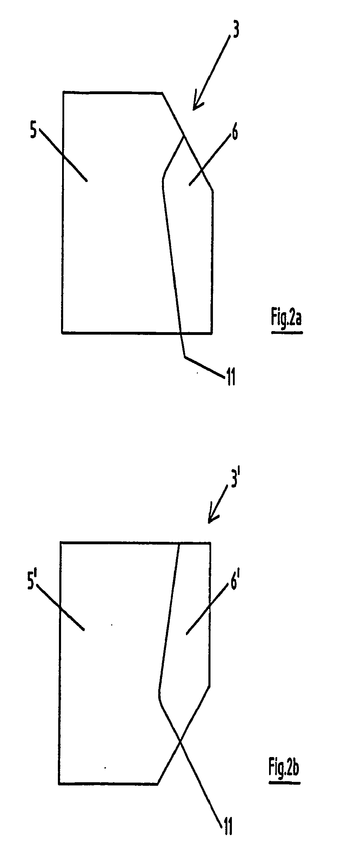

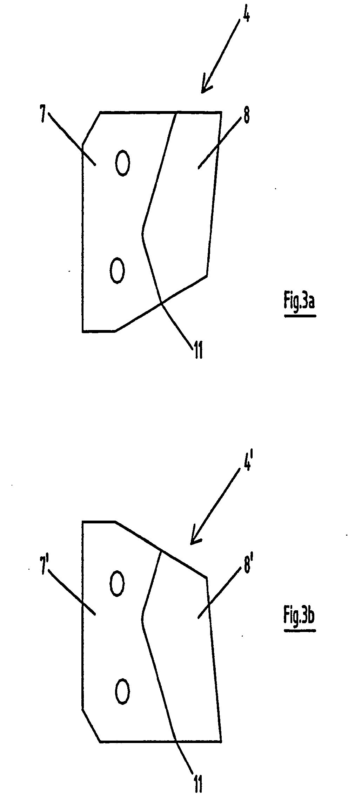

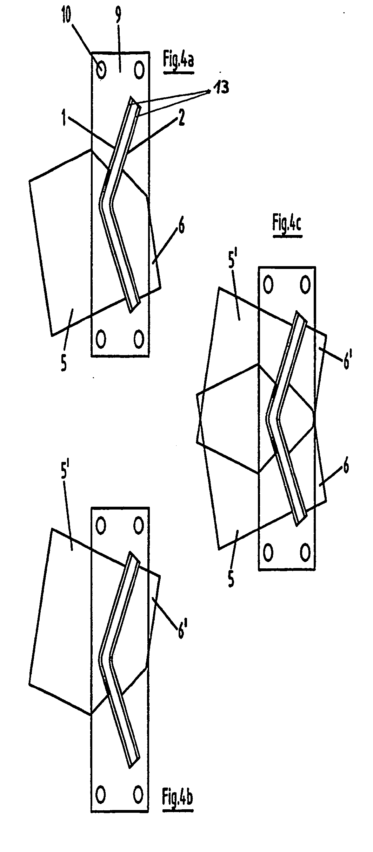

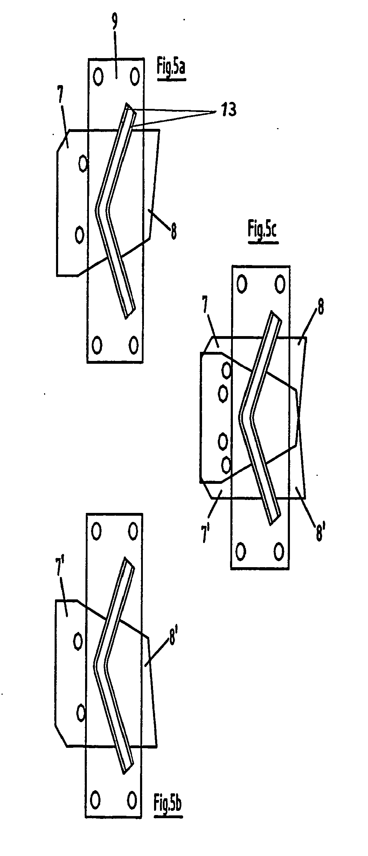

In den Figuren 2a und 2b bzw. 3a und 3b sind jeweils im Wesentlichen identische Bauteile 3 und 3' bzw. 4 und 4' dargestellt, die sich lediglich dadurch unterscheiden, dass sie spiegelbildlich zueinander ausgebildet sind. Derartige Teile werden insbesondere im Automobilbau z.B. an der linken und rechten Seite eines PKWs benötigt. Zur Kantenvorbereitung der beiden durch Laserschweißen zu einem Bauteil zu verbindenden Blechplatinen werden die in ihrer Form vorgefertigten Blechplatinenpaare 5, 6 bzw. 5', 6' bzw. 7, 8 bzw. 7', 8' so unter den beiden Schnittmessern 1, 2 positioniert, dass die in den Figuren 4 und 5 dargestellten Ränder 13 an den beiden gegenüberliegenden Rändern der Blechplatine mit einem Schnittvorgang gleichzeitig abgeschnitten werden. Diese beiden gegenüberliegenden Schnittlinien 11 werden dann in der direkt sich anschließenden Schweißanlage zusammengefügt und mit einer sauberen Laserschweißnaht verbunden. Die auf diese Weise beschnittenen Blechplatinen werden mit an sich bekannten Handhabungseinrichtungen, vorzugsweise ohne Zwischenlagerung auf dem Schweißtisch positioniert.

Die in den Figuren 2 und 3 dargestellten Bauteile bzw. Blechplatinen haben zwar jeweils unterschiedlich lange Schenkel der Schnittlinien 11, allen vier dargestellten Bauteilen ist aber gemeinsam, dass die Schenkel der Schnittlinien 11 in einem identischen Winkel zueinander angeordnet sind. Grundsätzlich können statt der geraden Schenkel auch beliebige zweidimensionale Schnittlinien hergestellt werden. Wichtig ist aber, dass diese Schnittlinien spiegelbildlich zu der Symmetrielinie 12 verlaufen und die Länge der beidseitig der Symmetrielinie 12 angeordneten Schnittlinien nicht länger ist als die Länge der beiden Schenkel der Schnittmesser.

### Bezugszeichenliste:

- 1: Schnittmesser für 5, 5', 7, 7'
- 2: Schnittmesser für 6, 6', 8, 8'
- 3: Bauteil
- 3': Bauteil (spiegelbildliche Anordnung zu 3)
- 4: Bauteil
- 4': Bauteil (spiegelbildliche Anordnung zu 4)
- 5: Blechplatine für 3
- 5': Blechplatine für 3'
- 6: Blechplatine für 3
- 6': Blechplatine für 3'
- 7: Blechplatine für 4
- 7': Blechplatine für 4'
- 8: Blechplatine für 4
- 8': Blechplatine für 4'
- 9: Messerhalter
- 10: Führungen (senkrecht)
- 11: Schnittlinie (zweidimensional)
- 11a: Schenkel von 11
- 11b: Schenkel von 11
- 12: Symmetrielinie zu 11
- 13: Rand

## Patentansprüche

1. Doppelschnittwerkzeug zur gleichzeitigen Kantenvorbereitung von vorzugsweise mittels Laserstrahl zu verschweißenden Blechplatinen (5 bis 8, 5' bis 8'), vorzugsweise unterschiedlicher Dicke mit mindestens zwei parallel zueinander angeordneten Schnittmessern (1, 2), die an einem gemeinsamen Messerhalter (9) befestigt sind und mit diesem zum Schneiden senkrecht zur Ebene der Blechplatinen bewegbar sind, **dadurch gekennzeichnet, dass** die Schnittmesser (1, 2) in der Ebene der Blechplatinen (5 bis 8, 5' bis 8') zweidimensionale Schnittlinien (11) haben, deren Schenkel (11a und 11b) spiegelsymetrisch zu einer Symmetrielinie (12) angeordnet sind, wobei der Schnittpunkt der beiden Schenkel (11a und 11b) von beiden Schnittmessern ( 1und 2) auf der Symmetrielinie (12) angeordnet ist.

2. Doppelschnittwerkzeug nach Anspruch 1 oder 2, **dadurch gekennzeichnet, dass** die Schnittlinien (11) aus jeweils zwei geraden, gleichlangen Schenkeln (11a, 11b) bestehen, die winklig zueinander angeordnet sind.

3. Verfahren zur gleichzeitigen Kantenvorbereitung von vorzugsweise mittels Laserstrahl zu verschweißenden Blechplatinen unter Verwendung eines Doppelschnittwerkzeuges nach den vorhergehenden Ansprüchen, wobei jeweils die beiden zu verschweißenden Blechplatinen gleichzeitig mit ein und demselben Doppelschnittwerkzeug beschnitten werden und vorzugsweise mit einer Handhabungsvorrichtung direkt in die Schweißstation eingelegt werden, **dadurch gekennzeichnet, dass** mit ein und demselben Doppelschnittwerkzeug nacheinander die Blechplatinen für spiegelbildliche Bauteile oder zumindest für Bauteile mit spiegelbildlichen Schnittlinien beschnitten werden, wobei die Blechplatinen jeweils spiegelbildlich zu der Symmetrielinie der Schnittlinie der Schnittmesser eingelegt werden.

4. Verfahren nach Anspruch 3, **dadurch gekennzeichnet, dass** das Dopelschnittwerkzeug mit Hilfe einer Presse und/oder von Druckzylindern oder sonstigen Betätigungseinrichtungen betätigt wird.

## Claims

1. A double cutting tool for simultaneous edge preparation of sheet bars (5 to 8, 5' to 8') to be welded together preferably by a laser beam, and preferably being different in thickness, comprised of at least two cutting knives (1,2) arranged in parallel to each other and fastened to a common knife holder (9) and being movable with said knife holder for cutting vertically to the plane of the sheet bars, **characterized in that** said knife edges (1, 2) in the plane of said sheet bars (5 to 8, 5' to 8') have two-dimensional cutting lines (11), the legs (11a and 11b) of which are arranged mirror-symmetrically to one line of symmetry (12), with the point of intersection of both legs (11a and 11b) of both cutting knives (1 and 2) being arranged on the line of symmetry (12).

2. A double cutting tool as defined in claim 1 or 2, **characterized in that** the cutting lines (11) are comprised of two straight equally long legs (11a, 11b) each which are arranged at an angle to each other.

3. A method for simultaneous edge preparation of sheet bars to be welded together preferably by a laser beam, using a double cutting tool according to the preceding claims, with the two sheet bars to be welded together each are cut with one and the same double cutting tool and preferably inserted with a handling device directly into the welding station, **characterized in that** the sheet bars for homologous components or at least for components with homologous cutting lines are cut one after another with one and the same double cutting tool, with the sheet bars each being inserted homologously to the line of symmetry of the cutting line of the cutting knives.

4. A method as defined in claim 3, **characterized in that** the double cutting tool is actuated by the aid of a press and/or pressure cylinders or other actuating devices.

## Revendications

1. Outil à double tranchant pour la préparation simultanée d'arêtes de platines de tôle à souder (5 à 8, 5' à 8') de préférence de différentes épaisseurs, de préférence au moyen d'un faisceau laser avec au moins deux couteaux (1, 2) disposés parallèlement l'un à l'autre et fixés à un porte-couteau (9) et pouvant être déplacés avec ledit support verticalement au plan des platines de tôle pour faire des coupes, **caractérisé en ce que** les couteaux (1, 2) ont deux lignes de coupe bidimensionnelles (11) dans le plan des platines de tôle (5 à 8, 5' à 8'), les ailes de ces lignes de coupe (11 a et 11 b) étant ordonnées symétriquement par réflexion par rapport à un axe de symétrie (12), le point d'intersection des deux ailes (11 a et 11 b) des deux couteaux (1 et 2) se trouvant sur l'axe de symétrie (12).

2. Outil à double tranchant selon la revendication 1 ou 2, **caractérisé en ce que** les lignes de coupe (11) sont constituées chacune de deux ailes droites de même longueur (11a, 11b) qui forment un angle l'une par rapport à l'autre.

3. Procédé pour la préparation simultanée d'arêtes de platines de tôle à souder, de préférence au moyen d'un faisceau laser, en utilisant un outil à double tranchant selon les revendications précédentes, les deux platines de tôle à souder étant découpées simultanément au moyen d'un seul et même outil à double tranchant et étant introduites directement dans la station de soudage, de préférence à l'aide d'un dispositif de manutention, **caractérisé en ce que** les platines de tôle sont découpées les unes après les autres pour des composants symétriques ou au moins pour des composants avec lignes symétriques au moyen d'un seul et même outil à double tranchant, les platines de tôle étant respectivement introduites symétriquement à l'axe de symétrie de la ligne de coupe des couteaux.

4. Procédé selon la revendication 3, **caractérisé en ce que** l'outil à double tranchant est actionné au moyen d'une presse et/ou de vérins pneumatiques ou autres dispositifs de commande.
